# EUROPEAN PATENT SPECIFICATION

(11) **EP 3 243 257 B1**
(45) Date of publication and mention of the grant of the patent: **17.07.2019**
(21) Application number: 16702583.2
(22) Date of filing: 02.01.2016
(51) Int. Cl.: H02J 50/10, H04B 5/00

(54) **MODULAR DEVICE FOR WIRELESS TRANSMISSION OF ELECTRICAL POWER**
MODULARE VORRICHTUNG ZUR DRAHTLOSEN ÜBERTRAGUNG VON ELEKTRISCHER ENERGIE
DISPOSITIF MODULAIRE POUR LA TRANSMISSION SANS FIL D'ÉNERGIE ÉLECTRIQUE

(30) Priority: 08.01.2015 EP 15150526
(43) Date of publication of application: 15.11.2017
(73) Proprietor: Ferrari BK S.r.L., 37023 Lugo di Grezzana (VR) (IT)
(72) Inventor: CAVALLI, Stefano, 37019 Peschiera del Garda (VR) (IT); TREVISAN, Marco, 37019 Peschiera del Garda (VR) (IT); SILVA, Marcello, 37019 Peschiera del Garda (VR) (IT)
(74) Representative: Laghi, Alberto
(86) International application number: PCT/IB2016/050007
(87) International publication number: WO 2016/110790

(56) References cited:
- US-A1- 2010 219 183
- US-A1- 2012 248 981

## Description

The present invention relates to a modular device for wireless transmission of electrical power.

In particular, the invention in question is advantageously employed to perform the transmission of electrical power from a power source to an electrical load without the use of a solid conductor or a direct connection between the two, through surfaces of buildings and constructions in general, e.g., brickwork flooring or walls, which the following description will make explicit reference to without thereby losing generality.

In general, "wireless power supply" or "wireless electrical power transmission" refer to the transmission of electrical power from a power source to an electrical load without the use of a solid conductor or a direct connection between the two.

Wireless transmission is useful in cases where interconnection cables are inconvenient, dangerous, unsightly or where operating conditions prevent their use. Presently, the prior art for wireless power transfer involves the use of electromagnetic radiation.

In general terms, the problems relating to the transmission of electrical power by means of electromagnetic waves are similar to those of telecommunications, to which, however, the problem of power attenuation of the transmitted signal must be added, which, in the case of wireless electrical power transmission, has consequences in terms of transmission efficiency.

Transmission efficiency is defined as the ratio between the electrical power produced by the receiver in a given time frame divided by power absorbed by the emitter during the same time interval.

At present, commercially available devices allow power transmissions generally lower than 10W at a distance of 5-17 mm with operating frequencies of the magnetic field produced by the emitter exceeding 100 kHz.

The safety regulations for variable magnetic fields in household define a 100 kHz threshold after which such fields may begin to be harmful to the human body. In terms of safety, therefore, it is critical produce a technology capable of maintaining transmission efficiency levels between emitter and receiver inductors over 80% with fields at a frequency of less than 100 kHz.

Moreover, in terms of power, a threshold of 10 Watts is insufficient to create emitting flooring capable, for example, of feeding lighting bodies.

In terms of transmission distance, all equipment produced according to the state of the art allows efficient transmissions (over eighty per cent) in a distance range between 5 and 17 mm. Today, only some known equipment allows transmissions in a range over 15 cm, but such devices employ pulsed magnetic fields with frequencies greater than 3 MHz.

Therefore, in terms of distance, the production of new technologies capable of transmitting powers over 10 Watts at distances in the range between 20 and 50 mm is required. In terms of cost and applicability, all technologies presently available on the market and made according to the state of the art do not allow a widespread application of electrical power transmission technology; in fact, they require to be installed directly into the load of a receiving device. Having to be installed directly into the load, the receiving device cannot exceed certain size limits set by the manufacturer of the device itself.

This represents the main issue for the diffusion of a universal wireless electrical transmission technology intended as a technology capable of feeding different types of devices without requiring any type of design or construction modification to the manufacturer of the device in question. Furthermore, limited and peculiar possibility of different sizes for each device allows the production of receivers capable of generating at most a DC current, being provided solely with an AC/DC converter. Therefore, all devices requiring alternating current power supply at 220/110 volts/ 50/60Hz and all devices that do not allow a post-production installation of a receiver inside the case or that do not allow the wiring to a power supply circuit are presently excluded.

Also excluded are the possible uses on brickwork structures and constructions because the distance between emitter and receiver (20 mm) exceeds any ability of commercially available devices to efficiently transmit electrical power.

The user devices which may be used fail to exceed the 5-10 watt power, thus being limited to battery chargers and low-power lighting devices.

Furthermore, in terms of reliability, all equipment presently available on the market comes with integrated logic systems or even software adapted to control the surrounding environment and decide whether to turn on or not the emitting apparatus.

This approach is unacceptable in case the user wants to insert disposable emitting equipment including it in construction materials, both for economic reasons, related to high production costs of such equipment, and for the long-term reliability of the employed electronic components. In terms of reliability and cost, it is therefore necessary to provide a very simple and reliable emission circuit with low-cost hardware control systems.

Prior art documents US2010/219183 A1 and US2012/248981 A1 disclose modular devices for transmitting electrical power in wireless mode comprising an inductor group, BUT those devices are not configured to render the replacement of the inductor group easier in case of hardware failures, this inductor being held between a bracket and a flat element like a tile, and also are not configured to use magnetic means to easy permit to fix the device to elements such as tiles or similarf buiildings parts in order to supply power to light sources in wireless mode.

Finally, it is necessary to make special flooring allowing the installation of the electrical equipment and its maintenance without compromising the aesthetic result of the brickwork and without causing any weakening of the wall structure itself.

The object of the present invention is therefore to realize a modular wireless electrical power transmission device, capable of overcoming the drawbacks and problems of the prior art, highlighted above.

In particular, the object of the present invention is to provide an emitter/transmitter provided with an emission inductor not dependent on the emitting board and provided with a bracket structure adequate for the installation on modular elements such as tiles or flooring in general.

A further object of the present invention is to provide an emitter/transmitter based on inductive coupling technology and mountable on modular elements (e.g. tiles) for flooring or walls in order to supply power to light sources in wireless mode or with electrical load or the like.

A further object is to provide an emitter/transmitter that is activated only in presence of a suitable user device nearby, in order to reduce electrical consumption and prevent accidental couplings with other objects, and able to transfer at least 100 watts of power at a given distance (preferably 20 mm) and with an 80% higher efficiency.

A further object of the present invention is to provide an emitter/transmitter that does not exceed the 100 kHz safety threshold for humans in terms of transmission frequency.

A further object is to provide an emitter/transmitter only consisting of hardware to avoid any human mistake and error (bug) in software implementations and accommodating a quick-release coupling system in order to facilitate the replacement of the component in case of hardware failures.

The structural and functional characteristics of the present invention and its advantages over the known art will become even more apparent and more evident from the claims below, and in particular from an examination of the description that follows, referring to the attached drawings, which show the schematic representations of a preferred but non-limiting embodiment of a modular device for wireless transmission of electrical power, wherein:
- Figure 1 shows a side, central section view of the inductor/emitter with the modular bracket structure in question;
- Figure 2 is a bottom plan view of the inductor/emitter with the modular bracket structure of Figure 1;
- Figure 3 is a top plan view of the inductor/emitter with the modular bracket structure of Figure 1;
- Figure 4 represents the wiring diagram and components for the construction of an emitting board of the modular device in question;
- Figure 5 represents the wiring diagram and components for the construction of a receiving board of the modular device in question for lighting applications; and
- Figure 6 shows the wiring diagram and components for the construction of the receiving board of the modular device to supply loads at 220/110 volts/ 50/60Hz.

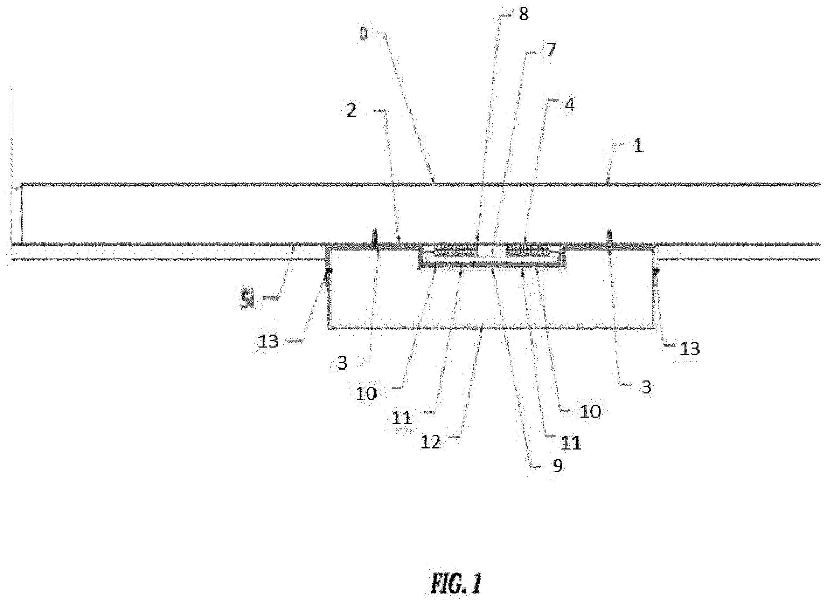

With reference to the annexed Figure 1, D globally indicates a modular device for wireless electrical power transmission, particularly installable in building floorings or walls in general, in order to perform the electrical power transmission from a power source to an electrical load in general, for example a lighting lamp or an equivalent lighting source, without the use of a solid conductor or a direct connection between the two.

The device D comprises a flat element 1 of the tile type, which is adapted to be installed on a flooring, and a bottom surface Si of the same, adapted for mounting an inductor-emitter group 4 supported by a bracket 2 attached to the same surface Si with screw coupling means 3.

The group 4 comprises an inductor/emitter 4 disposed and fixed on a graphite plate or sheet 7, bearing a centering magnet 8 at its centre, also attached to the graphite plate or sheet, in turn arranged on a central support 9 of bracket 2, and electrically connected to two contact connectors, both marked with 10, also attached to the graphite plate or sheet.

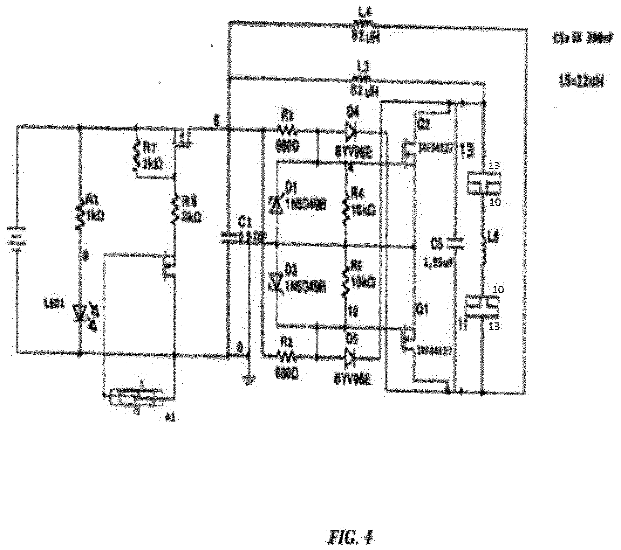

Figure 1 also shows the housing 12 of an emitting board, hooked to the bracket screw coupling means 13 and provided with two contact connectors 11, to which the emitting board is wired. Once in contact, the two connectors 10 and 11 form the closing of the circuit shown in Figure 4.

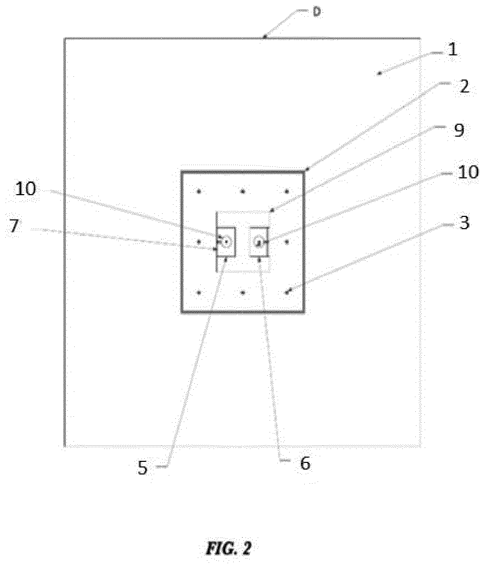

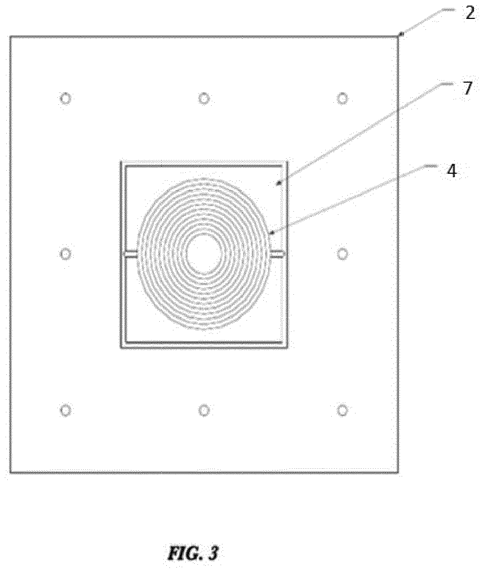

Figures 2 and 3 show in detail the bracket 2 and the inductor/emitter therefrom supported in top and bottom view.

According to the wiring diagram shown in Figure 4, an emitting circuit is employed fed by an AC/DC transformer that transforms the network current into a direct current up to 19 Volts and 4 amps.

The emitting circuit consists of a DC/AC transformer or oscillating, Royer-type circuit transforming the 19-volt direct current in an alternating current with a rate of less than 100 Hz by means of an LC oscillator.

The emitting circuit, the layout and sizing of the main components of which is shown in Figure 4, constitutes an oscillating, self-amplified LC circuit supplied in direct voltage with maximum yield frequency of the amplifier peaked on the oscillation frequency of the LC circuit, consisting of an inductor L5 and the capacitor C5.

The emitter circuit supplied by the AC/DC transformer constitutes the primary circuit transforming the network current in an alternating current with a frequency of less than 100 kHz. The use of a planar inductor with an air gap as the inductor L5 finally allows to transform the alternating current with a frequency of less than 100 kHz into a pulsed magnetic field with a frequency of less than 100 kHz.

It must be emphasized that the calibration of the capacitors and inductances of receiving circuits and the transmitter are critical to obtain transmission (at 20 mm) with a less than 100 kHz frequency and an efficiency greater than 80%.

In use, the emitting circuit and the AC/DC power supply are inserted into the housing 12, hooked to the bracket 2 which in turn is coupled to tile 1 and connected to the network at 220/110V. The tile 1 is then installed on the floor or wall of a building.

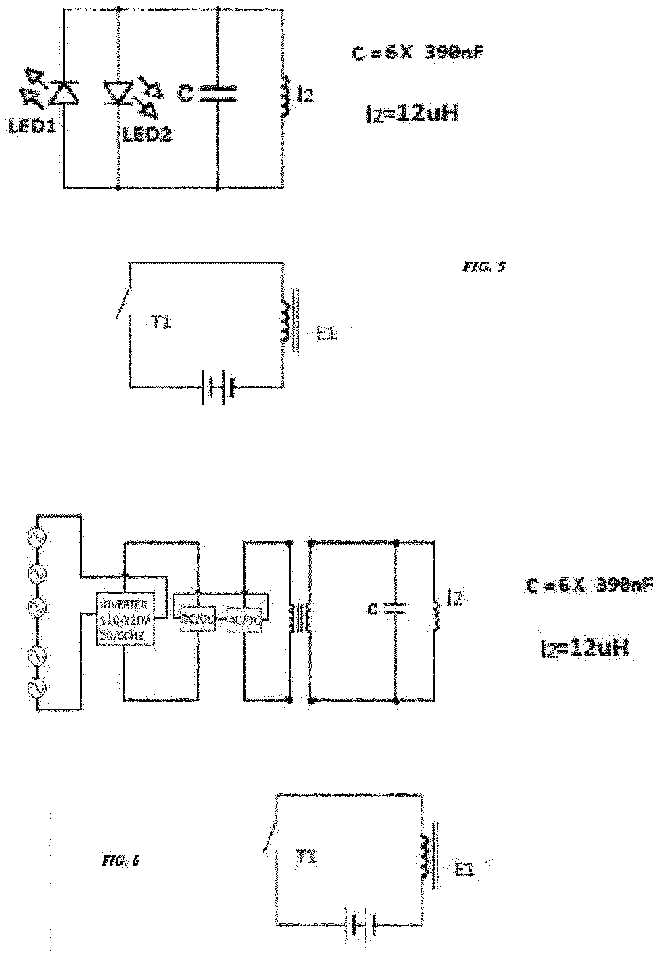

Therefore, a LED lighting body is realized with two LEDs (boards 5) of equal power but wired with reverse polarization, so that one is off when the other is on and vice versa, as shown in the diagram of Figure 5.

The lighting body may be installed in the preferred support provided that the receiving circuit is maintained, defined by an LC circuit with inductance 12 and capacitor C and resonance frequency corresponding to the resonance frequency of the emitting circuit and thus coupled therewith, close to the floor or wall.

At this time,by closing the switch T1, the battery-powered starter circuit is fed, which turns the electromagnet E1 on. The electromagnet E1 is calibrated to activate the reed switch A1 of the emitter only if the receiver is within a radius of 50 mm from the receiver. If this condition is satisfied, the magnetic field generated by the electromagnet E1 activates the reed switch of the emitter, closing its supply circuit and turning the pulsed electromagnetic field on. The portion concatenated to the receiving inductor will be converted to an alternate current of equal frequency of the produced magnetic field that will power the two LEDs alternately.

On the other hand, signal amplitude, and then the secondary circuit current voltage will depend on the portion of the field concatenated to the inductor 12 of the receiver; thus, moving the receiver within a radius of 50 mm from the emitter, a *dimmer* effect of the lighting body is obtained.

A variant of the invention illustrated in Figure 6 involves providing the receiving circuit with a power driver or secondary circuit. The two circuits are separated by a unit transformer decoupling the two circuits without changing the voltage and signal current features.

The secondary circuit has an AC/DC transformer that rectifies the alternating current with a frequency of less than 100 kHz and produces a direct current with voltage between 5 and 60 Volts, a DC/DC transformer that transforms the direct current voltage between 5 and 60 Volts in a direct current with a 24-Volts voltage and a DC/AC inverter or transformer to transform 24V direct current in 220/110 volt/- 50/60Hz alternating current.

In this case, the secondary circuit acts as a wireless multiple socket, i.e. a wireless device capable of supplying electrical loads requiring 220/110 volt/ 50/60Hz alternating voltages.

## Claims

1. Modular device (D) for transmitting electrical power in wireless mode including a flat element (1) of the tile type and an inductor group (4) comprising electrical board means and contact connector means (10), **characterised in that** the modular device further includes a bracket (2), and a bottom surface (Si) of the flat element is adapted for mounting said inductor group (4) supported by said bracket (2) attached to the bottom surface (Si) with screw coupling means (3); said bracket (2) being provided with a recess for receiving said inductor group (4); said inductor group (4) being positioned between the bottom surface (Si) and the bracket (2); said electrical board means being arranged and fixed on a graphite plate or sheet (7) bearing magnet means (8); said magnet means (8) being arranged on a central support (9) of said bracket means (2).

2. Wall or flooring of buildings, comprising the modular device according to claim 1.

## Patentansprüche

1. Modulare Vorrichtung (D) zum Übertragen von elektrischer Energie im drahtlosen Modus, umfassend ein flaches Element (1) vom Fliesentyp und eine Induktor-Gruppe (4) mit Leitplattenmitteln und Kontaktverbindungsmitteln (10), **dadurch gekennzeichnet, dass** die modulare Vorrichtung ferner eine Klammer (2) aufweist, und eine Bodenfläche (Si) des flachen Elements ist zur Montage der genannten Induktor-Gruppe (4) ausgelegt, die von der genannten Klammer (2) getragen wird, die an der Bodenoberfläche (Si) durch Schraubverbindungsmittel (3) befestigt ist; wobei die genannte Induktor-Gruppe (4) ist zwischen der Bodenoberfläche (Si) und der Klammer (2) positioniert; wobei die genannten elektrischen Leitplattenmittel sind auf einer Graphitplatte oder Folie (7) angeordnet und befestigt, die Magnetmittel (8) trägt; wobei die genannten Magnetmittel (8) an einem zentralen Träger (9) der genannten Klammermittel (2) angeordnet sind.

2. Wand oder Boden von Gebäuden, umfassend die modulare Vorrichtung nach Anspruch 1.

## Revendications

1. Dispositif modulaire (D) de transmission d'énergie électrique en mode sans fil, comprenant un élément plat (1) du type tuile et un groupe inducteur (4) comprenant un moyen de tableau électrique et un moyen de connecteur de contact (10), **caractérisé en ce que** le dispositif modulaire comprend en outre un support (2), et une surface de fond (Si) de l'élément plat est adaptée pour monter ledit groupe inducteur (4) supporté par ledit support (2) fixé à ladite surface de fond (Si) par des moyens de couplage à vis (3) ; ledit support (2) étant pourvu d'une cavité pour recevoir ledit groupe inducteur (4); ledit groupe inducteur (4) étant positionné entre la surface de fond (Si) et le support (2); lesdits moyens de tableau électrique étant agencés et fixés sur une plaque ou feuille de graphite (7) portant des moyens magnétique (8); lesdits moyens magnétiques (8) étant disposés sur un support central (9) desdits moyens de support (2).

2. Mur ou plancher de bâtiments, comprenant le dispositif modulaire selon la revendication 1.
